# DEMANDE DE BREVET EUROPEEN

(11) **EP 4 543 015 A1**
(43) Date de publication de la demande: **23.04.2025**
(21) Numéro de dépôt: 24204868.4
(22) Date de dépôt: 07.10.2024
(51) Int. Cl.: H04N 21/262, H04N 21/4402, H04N 21/61, H04N 21/845

(54) **PROCÉDÉ DE GESTION DE L ACCÈS À DES FICHIERS DE DESCRIPTION ASSOCIÉS À UN CONTENU DIFFUSÉ EN TEMPS RÉEL**

(30) Priorité: 18.10.2023 FR 2311242
(71) Demandeur: Orange, 92130 Issy-les-Moulineaux (FR)
(72) Inventeur: MARCHAND, Hervé, 92326 Chatillon (FR); GASTE, Olivier, 92326 Chatillon (FR)

(57) **Abrégé**

L'invention se rapporte à un procédé de gestion de l'accès à des fichiers de description associés à un contenu diffusé en temps réel, la lecture du contenu requérant une réception, depuis un réseau de communication, de fichiers de description d'un premier type (MNFc) ou d'un deuxième type (MNFI), une interface de commandes (INT) étant accessible au cours de la lecture, caractérisé ce qu'il comprend une lecture initiale réalisée au moyen de fichiers de description du premier type (MNFc), et en ce qu'au cours de la lecture, une requête d'accès au fichier de description du deuxième type (MNFI) est transmise si une commande est sélectionnée, la lecture se poursuivant au moyen de fichiers de description du deuxième type reçus depuis le réseau.

## Description

### Domaine technique

Le domaine de l'invention est celui de la gestion de l'accès à des fichiers de description associés à un contenu multimédia diffusé en temps réel.

L'invention vise tout particulièrement des contenus segmentés, les segments étant accessibles selon plusieurs formats associés à des tailles respectives en octets ayant plus ou moins d'impact sur la bande passante du réseau sur lequel le contenu est téléchargé. L'invention vise tout particulièrement les contenus téléchargés selon une technique dite de téléchargement progressif adaptatif, ou HAS, ou toutes autres techniques de téléchargement utilisant le même principe.

Précisions que les adresses de segments sont incluses dans un fichier de description. Un fichier de description dans le contexte d'un téléchargement progressif adaptatif est un fichier comprenant entre autres des adresses IP des segments à télécharger et lire par un dispositif de lecture.

Le dispositif de lecture vise tous les dispositifs de traitement de données équipés de processeurs et capables de recevoir des segments depuis un réseau, de décoder les segments reçus et de requérir une restitution des segments décodés.

### Etat de la technique

Lors d'un accès à un contenu multimédia, un dispositif de lecture émet une requête à destination d'un serveur de contenus en indiquant le contenu multimédia (vidéo et/ou audio) choisi. Le dispositif de lecture reçoit en retour un flux de données numériques relatif à ce contenu. Dans le cadre d'un réseau de communication local, une telle requête peut transiter par une passerelle d'accès au réseau, par exemple une passerelle résidentielle.

Les données reçues sont ensuite décodées par le dispositif de lecture, puis restituées sous la forme d'un affichage de la vidéo correspondante avec sa bande-son associée.

La diffusion de contenus numériques sur Internet est souvent basée sur des protocoles client-serveur de la famille HTTP (de l'anglais « Hyper Text Transport Protocol »). En particulier, le téléchargement en mode progressif des contenus numériques, aussi appelé streaming, permet de transporter et lire les données en temps réel, c'est-à-dire que les données numériques sont transmises sur le réseau et restituées par le dispositif de lecture au fur et à mesure de leur arrivée. Suite à la réception du flux, le dispositif de lecture stocke des données reçues dans une mémoire tampon (buffer en anglais) avant de les restituer. Ce mode de distribution est particulièrement utile quand le débit dont dispose l'utilisateur n'est pas garanti pour le transfert en temps réel de la vidéo.

Le téléchargement progressif adaptatif, en anglais HTTP Adaptative Streaming, d'abréviation HAS, permet de surcroît de diffuser et recevoir des données suivant différentes qualités correspondant par exemple à différents débits d'encodage respectifs. Ces différentes qualités sont décrites dans un fichier de description, également appelé « Manifest » par l'homme du métier.

Quand un utilisateur accède au flux Live diffusé en http Adaptative Streaming (HAS), le dispositif de lecture récupère à intervalle régulier, en général toutes les deux secondes, des fichiers de description successivement, appelé ci-après fichiers de description d'un premier type, qui décrivent chacun généralement les soixante dernières secondes du flux (30 segments de 2 secondes) en fournissant des adresses de segments correspondant à ces soixante dernières secondes.

A noter que les segments vidéo sont choisis de courte durée car on souhaite être au plus proche du vrai Live. C'est également pour cette raison qu'on récupère le fichier de description toutes les deux secondes et qu'on limite la profondeur de buffer en général autour de quinze secondes.

A noter qu'un débit d'encodage est sélectionné parmi les débits disponibles en fonction de la bande passante disponible ou des capacités de stockage et de décodage du dispositif de lecture. Ce type de technique permet de tenir compte des variations de bande passante sur la liaison entre le dispositif de lecture client et le serveur de contenus.

Outre la lecture de contenus, certains dispositifs de lecture offrent une fonction appelée Start Over (ou « rattrapage » ou « retour au début ») qui permet à un utilisateur qui regarde un contenu diffusé en temps réel (chaine Live) de relire une partie du contenu qui a été diffusé ; cette fonction permet notamment de relire un contenu depuis son début. Par exemple, si un film débute à 21h00 et si l'utilisateur zappe sur la chaine à 21h40, l'utilisateur peut demander à ce que la lecture du contenu reprenne depuis le début du film en sélectionnant une commande dédiée par exemple via une télécommande. Dans ce cas, on passe d'un mode de lecture en temps réel à un mode de rattrapage.

Dans ce mode de rattrapage, une interface de commandes offre la possibilité de sélectionner une voire plusieurs commandes qui modifient la lecture du contenu diffusé en temps réel. Ces commandes permettent par exemple d'interrompre la lecture, ou de réaliser un saut temporel pour relire le contenu depuis un instant de lecture antérieur et donc de lire le contenu en différé.

Afin de relire le contenu, contrairement au cas visé ci-dessus dans lequel seule une lecture en temps réel est possible, lorsque le mode de rattrapage est disponible, le dispositif de lecture reçoit dès le début de la lecture du contenu un fichier de description spécifique, appelé ci-dessous fichier de description d'un deuxième type, qui décrit une grande partie des segments qui ont déjà été diffusés. Ce fichier de description de deuxième type ne décrit pas que les soixante dernières secondes mais une fenêtre temporelle plus importante de plusieurs heures, par exemple les quatre dernières heures de manière à pouvoir relire le contenu depuis un instant situé dans la fenêtre temporelle de quatre heures. Un tel fichier de description décrivant par exemple les quatre dernières heures est deux cent quarante (240) fois plus volumineux qu'un fichier de description classique. Concrètement, un fichier de description du premier type a une taille de l'ordre de 12ko (description de 30 segments de 2 secondes) et un fichier de description de deuxième type a une taille de l'ordre de 2.8Mo (description de 7200 segments de 2 secondes).

Tout comme le fichier de description de premier type, ce fichier de description de deuxième type est téléchargé de manière périodique par exemple toutes les deux secondes.

Du fait sa taille énorme, la transmission périodique du fichier de description de deuxième type requiert une bande passante énorme sur le réseau surtout pour des foyers équipés d'une ligne internet avec peu de débit tel qu'une ligne ADSL ; en outre de tels fichiers de description requièrent des temps de traitement (temps de parsing) trop importants pouvant altérer la lecture normale du contenu et provoquer des gels d'image insupportables pour un utilisateur.

L'invention vient améliorer la situation.

### L'invention

A cet effet, l'invention se rapporte à un procédé de gestion de l'accès à des fichiers de description associés à un contenu diffusé en temps réel, la lecture du contenu requérant une réception, depuis un réseau de communication, de fichiers de description d'un premier type ou d'un deuxième type, une interface de commandes étant accessible au cours de la lecture, caractérisé ce qu'il comprend une lecture initiale réalisée au moyen de fichiers de description du premier type, en ce qu'au cours de la lecture, une requête d'accès au fichier de description du deuxième type est transmise si une commande est sélectionnée, la lecture se poursuivant au moyen de fichiers de description du deuxième type reçus depuis le réseau.

Selon l'invention, bien que l'interface de lecture offre des commandes nécessitant un fichier de description de deuxième type, la lecture débute avec des fichiers de description du premier type ; ce n'est qu'après une sélection d'une commande de l'interface que le fichier de description de deuxième type est transmis et utilisé pour la lecture des segments par le dispositif de lecture.

L'invention retarde l'instant de transmission de ce fichier de description de deuxième type après sélection ou exécution d'une commande ; c'est-à-dire à un moment où il y a une volonté de modifier la lecture du flux en temps réel. Dans le meilleur des cas, aucune commande n'est sélectionnée par exemple parce qu'un utilisateur visualisant le contenu n'a pas du tout l'intention de sélectionner et donc d'exécuter une commande de l'interface ; dans ce cas le gain en bande passante est maximal.

Il en résulte un gain en bande passante sur le réseau qui véhicule les fichiers de description et un gain en traitement CPU jusqu'à sélection d'une commande du fait que le fichier de description reçu jusque la sélection de la commande est un fichier du premier type qui est dans notre exemple de plus petite en taille octets que le fichier de description de deuxième type. A noter que l'invention pourrait s'appliquer à un fichier de premier type plus gros en taille qu'un fichier de description de deuxième type.

Selon un premier mode de réalisation du procédé, la réception des fichiers de deuxième type cesse après une durée donnée et est remplacée par une réception du fichier de description premier fichier. Lorsqu'il est constaté, suite à l'exécution de la commande qu'aucune autre commande n'est sélectionnée pendant une durée donnée, l'entité de gestion requiert de nouveau la réception des fichiers de description de premier type. Ce mode permet de réduire la charge CPU dès que possible sans altérer l'expérience utilisateur.

Selon encore un deuxième mode de mise en oeuvre particulier de l'invention, qui pourra être mis en oeuvre alternativement ou cumulativement avec le précédent, la sélection est suivie d'une transmission d'une requête d'accès aux fichiers de description de deuxième type et en ce que la commande sélectionnée est exécutée après réception d'un fichier de description du deuxième type. Ce mode évite d'exécuter une commande alors que le fichier de description de deuxième type permettant l'exécution de la commande n'est pas encore reçue. Selon une variante de ce troisième mode, la commande sélectionnée est exécutée après réception du premier fichier de description du deuxième type.

Selon encore un troisième mode de mise en oeuvre particulier de l'invention, qui pourra être mis en oeuvre alternativement ou cumulativement avec le précédent, l'interface de commandes comprend des commandes dont certaines entraînent une lecture différée du contenu ; dans cette configuration, la transmission d'une requête d'accès au fichier de description du deuxième type est effectuée uniquement pour des commandes entraînant une lecture différée. Ce mode permet de poursuivre la transmission des fichiers de description du premier type malgré la sélection d'une commande. Ce mode distingue les commandes nécessitant une lecture différée ou pas.

Selon un aspect matériel, l'invention se rapporte à une entité de gestion de l'accès à des fichiers de description associés à un contenu diffusé en temps réel, la lecture du contenu requérant une réception, depuis un réseau de communication, de fichiers de description d'un premier type ou d'un deuxième type, une interface de commandes étant accessible au cours de la lecture, caractérisé ce qu'il comprend un module de lecture apte à lire initialement le contenu au moyen de fichiers de description du premier type, et apte à, au cours de la lecture, suite à une sélection d'une commande, déclencher une transmission d'une requête d'accès au fichier de description du deuxième type ; la lecture se poursuivant au moyen de fichiers de description du deuxième type reçus en retour depuis le réseau.

Selon un autre aspect matériel, l'invention se rapporte à un dispositif de lecture comprenant une entité de gestion telle que définie ci-dessus.

Selon un autre aspect matériel, l'invention a pour objet un programme d'ordinateur apte à être mis en oeuvre sur une entité de gestion telle que définie ci-dessus, le programme comprenant des instructions de code qui, lorsqu'il est exécuté par un processeur, réalise les étapes du procédé de gestion définies ci-dessus.

Selon un autre aspect matériel, l'invention a pour objet un support de données sur lequel a été mémorisée au moins une série d'instructions de code de programme pour l'exécution d'un procédé de gestion tel que défini ci-dessus.

Le support en question peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
[Fig 1] représente une architecture de téléchargement progressif sur Internet basée sur l'utilisation du streaming adaptatif selon un mode de réalisation du procédé de l'invention ;
[Fig 2] illustre de façon schématique la structure matérielle d'un serveur apte à transmettre des fichiers de description ;
[Fig 3] illustre de façon schématique la structure matérielle d'un dispositif de lecture apte à lire des flux multimédias en temps réel ;
[Fig 4] illustre un contenu et les segments disponibles pour ce contenu.
[Fig 5] illustre un mode de réalisation du procédé de l'invention ; cette figure illustre la communication entre le dispositif de lecture et le serveur de contenus et le type de fichiers de description transmis en fonction du temps..
[Fig 6] illustre une variante possible du précédent mode décrit en référence à la figure 5.

### Description détaillée de modes de réalisation de l'invention

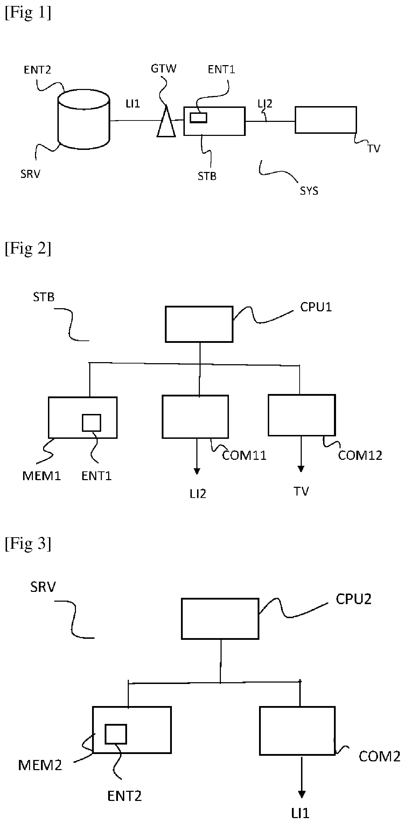

La figure 1 représente un système informatique SYS dans lequel est mis en oeuvre un réseau de diffusion de contenus appelé CDN (Content Distribution Network) par l'homme du métier depuis lequel sont transmis des contenus à destination de dispositifs clients ou dispositifs de lecture de contenus et des fichiers de description associés aux contenus multimédias.

Dans notre exemple, le système comprend un seul dispositif de lecture STB. Cependant l'invention s'applique à un nombre quelconque de dispositifs de lecture.

Le dispositif de lecture est par exemple un dispositif de lecture numérique tel qu'un décodeur.

Le contenu multimédia visé ici est un contenu vidéo correspondant par exemple à une chaîne de télévision sur laquelle sont diffusés des programmes télévisés ayant une heure de début correspondant à une heure de diffusion programmée et une heure de fin. Le contenu en question en diffusé en mode multicast.

Dans notre exemple, le dispositif de lecture STB est connecté à un terminal de restitution TV tel qu'une télévision.

Dans notre exemple, le dispositif de lecture STB est connecté sur un port du dispositif de restitution TV ; le dispositif de lecture dispositif de lecture STB et le dispositif de restitution TV pourrait aussi former un seul et unique dispositif.

Dans notre exemple, le dispositif de lecture STB est situé dans un réseau local LAN (sigle anglosaxon de « Local Area Network ») géré par une passerelle domestique GTW. Le contexte du réseau local est donné à titre d'exemple et pourrait être transposé aisément à un réseau Internet de type « best effort », un réseau d'entreprise, etc. On verra dans la suite que le dispositif de lecture STB comprend une première entité de gestion ENT1.

La passerelle GTW est apte à communiquer via un réseau de télécommunication LI1 tel qu'un réseau étendu WAN connu de l'homme du métier.

Le système informatique SYS met en oeuvre un réseau de diffusion de contenus appelé CDN (Content Distribution Network) par l'homme du métier depuis lequel des contenus sont transmis à destination de dispositifs clients ou dispositifs de lecture de contenus STB.

Le réseau CDN est constitué de serveurs reliés en réseau dans le réseau étendu ; ces serveurs coopèrent afin de mettre des contenus multimédias à disposition des utilisateurs en mode unicast. Afin de simplifier l'exposé de l'invention, un seul serveur de contenus SRV sera représenté sur la figure 1 pour représenter le CDN. Le serveur de contenus SRV se trouve, dans notre exemple, dans le réseau étendu WAN.

Le serveur de contenus SRV reçoit par exemple des chaînes de contenus de télévision numérique en provenance d'un réseau de télévision diffusée (non représenté), et les met à disposition en temps réel à des terminaux clients, ici le dispositif de lecture STB.

Les contenus CNT sont mis à disposition en mode unicast dans un format donné. Un tel contenu CNT est, par exemple, un contenu téléchargé en mode de streaming adaptatif. La norme MPEG-DASH (pour l'anglais "Dynamic Adaptive Streaming over HTTP", en français « diffusion en flux adaptatif dynamique sur HTTP ») est un standard de format de diffusion audiovisuelle sur Internet ; ce standard se base sur la préparation du contenu en différentes représentations de qualité et débit variables, découpées en segments de courte durée (de l'ordre de quelques secondes), également appelés « chunks » par l'homme du métier. Chacun de ces segments est rendu disponible individuellement au moyen d'un protocole d'échange entre le terminal de restitution et le serveur fournisseur de contenus multimédias. Le protocole principalement ciblé est le protocole HTTP, mais d'autres protocoles (par exemple FTP) peuvent également être utilisés. L'organisation des segments et les paramètres associés sont publiés dans un fichier de description au format XML. Nous ne rentrerons pas plus dans les détails de ce mode de téléchargement car sans intérêt pour l'exposé de l'invention.

Un exemple de fichier de description ou manifeste (MPD) conforme à la norme MPEG-DASH et comportant la description de contenus disponibles dans trois qualités différentes (N1 = 512 kb/s, N2 = 1024 kb/s, N3 = 2048 kb/s) des contenus fragmentés est présenté en Annexe 1. Ce fichier de description simplifié décrit des contenus numériques dans une syntaxe XML (de l'Anglais « eXtended Markup Language»), comprenant une liste de contenus sous forme de segments classiquement décrits entre une balise ouvrante (<SegmentList>) et une balise fermante (</SegmentList>). La découpe en segments permet notamment de s'adapter finement aux fluctuations de la bande passante. Chaque segment correspond à une certaine durée (champ « duration ») avec plusieurs niveaux de qualité et permet de générer leurs adresses (URL - Uniform Resource Locator). Cette génération est faite dans cet exemple à l'aide des éléments « BaseURL » (« HTTP://server.com») qui indique l'adresse du serveur de contenus et « SegmentURL » qui liste les parties complémentaires des adresses des différents segments :
- « C1_512kb_1.mp4 » pour le premier fragment du contenu « C1 » à 512 kilobits par seconde (« kb ») au format MPEG-4 (« mp4 »),
- « C1_512kb_2.mp4 » pour le second fragment,
- etc.

La figure 2 le serveur SRV est également équipé d'au moins un processeur CPU2 et de mémoires MEM2 pour la réalisation de traitement informatique. Le serveur est également équipé d'une entité de gestion ENT2, dite deuxième entité de gestion, apte à gérer la transmission d'un contenu et du fichier de description associés au contenu du serveur SRV à destination d'un ou plusieurs dispositifs de lecture, ici vers le dispositif de lecture STB. Le serveur SRV communique avec la passerelle GTW via réseau WAN. Le serveur comporte, la communication avec le réseau WAN, un module de communication référencé COM2 sur la figure 3. On s'intéressera essentiellement dans la suite à la transmission du fichier de description plutôt que de la transmission des segments.

La figure 3 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le dispositif de lecture STB peut transmettre un contenu à restituer au dispositif de restitution TV via un module de communication COM12. Ce module COM12 est par exemple une liaison HDMI.

Le dispositif de lecture STB communique avec la passerelle via un module Ethernet pour une communication locale avec fils ou via un module radio de type WiFi pour une communication locale sans fils avec la passerelle résidentielle GTW. Le module en question est référencé CMO11 sur la figure 2.

Le dispositif de lecture STB comprend une entité de téléchargement en mode streaming (non représentée) apte à gérer le téléchargement de segments du contenu. Le dispositif de lecture STB comprend également une entité de gestion ENT1, dite deuxième entité de gestion dans la suite apte à lire un fichier de description construit spécifiquement lors d'une lecture en mode rattrapage comme cela est expliqué ci-dessous.

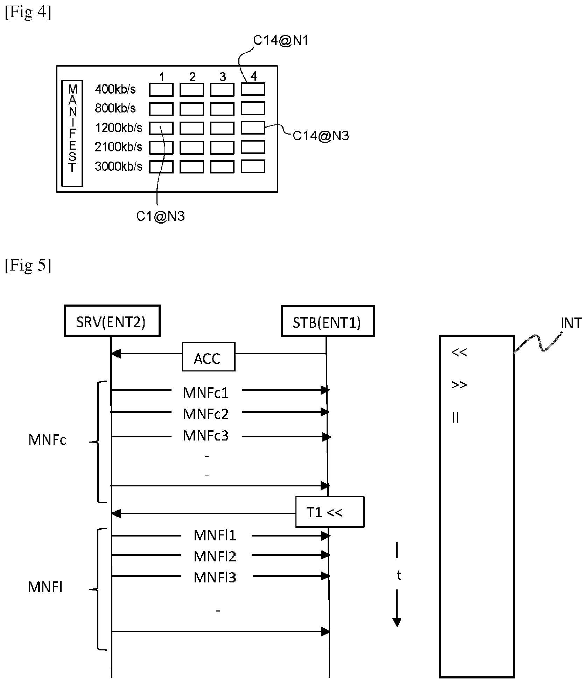

On présente désormais, en relation avec la figure 4, une vue schématique d'un contenu principal C1 découpé en segments et stocké dans le serveur de contenus SRV. Plus précisément, le serveur de contenu HAS expose une vidéo C1 sous forme de segments Cli@Nj encodés à différents débits d'encodage Nj, où l'indice i désigne un identifiant temporel du segment C1i@Nj.

Le module de téléchargement HAS, appelé mode de téléchargement classique ci-dessous, du dispositif de lecture STB est chargé de venir récupérer les segments auprès du serveur de contenu HAS en choisissant la qualité vidéo Nj en fonction de la ressource réseau disponible. On ne décrit pas ici plus en détail la façon dont le module de téléchargement HAS choisit le débit d'encodage du prochain segment vidéo à télécharger : il existe en effet de nombreux algorithmes permettant d'opérer ce choix, dont les stratégies sont plus ou moins sécuritaires ou agressives. On rappelle cependant que, le plus souvent, le principe général de tels algorithmes repose sur le téléchargement d'un premier segment au débit d'encodage le plus faible proposé dans le fichier de description, et sur l'évaluation du temps de récupération de ce premier segment. Sur cette base, le module de téléchargement HAS évalue si, en fonction de la taille du segment et du temps mis pour le récupérer, les conditions réseau permettent de télécharger le segment suivant à un débit d'encodage plus élevé. Certains algorithmes reposent sur une augmentation progressive du niveau de qualité des segments de contenu téléchargés ; d'autres proposent des approches plus risquées, avec des sauts dans les niveaux des débits d'encodage des segments successifs.

Dans le cas classique, si un segment vidéo dure trois secondes, la récupération du segment par le module de téléchargement HAS ne doit pas excéder 3 secondes, afin de permettre une restitution sans interruption du contenu par le dispositif de lecture STB. Il convient donc pour le module de téléchargement HAS d'opérer le meilleur compromis entre une qualité de restitution, et donc un débit d'encodage, aussi élevés que possible, et le temps de téléchargement du segment, qui doit être suffisamment faible pour permettre une restitution en continu sur le téléviseur TV.

Dans un premier temps, le module HAS récupère le fichier de description qui correspond au contenu vidéo C1 afin de découvrir les segments disponibles du contenu vidéo C1, et les différentes qualités vidéo Nj associées. Dans l'exemple de la figure 4, le contenu C1 est par exemple proposé sous forme de segments de durée 3s, avec un premier débit d'encodage N1 = 400 kb/s, un deuxième débit d'encodage N2 = 800 kb/s, un troisième débit d'encodage N3 = 1200 kb/s, etc.

Dans un mode de fonctionnement normal, non illustré sur la figure 4, le module HAS opère le téléchargement par exemple, des segments successifs C11@N1 (soit le premier segment temporel à un débit d'encodage de 400 kb/s), puis C12@N3 (soit le deuxième segment temporel à un débit d'encodage de 1200 kb/s), puis C13@N3 (soit le troisième segment temporel à un débit d'encodage de 1200 kb/s), etc.

Les différents segments téléchargés par le module de téléchargement HAS sont ensuite transmis à un module d'affichage apte à requérir un affichage sur le téléviseur TV.

L'algorithme mis en œuvre par le module de téléchargement HAS pour déterminer quel segment à quel débit d'encodage doit être téléchargé en mode de fonctionnement normal peut être l'un des algorithmes déjà existants de l'art antérieur. Cet algorithme ne sera donc pas décrit ici plus en détail.

Il arrive parfois de manquer le début d'un programme télévisé (film, série, etc.). Une fonction appelée « lire du début » ou « rattrapage » (appelée également « Start Over » ou « Restait » par l'homme du métier) permet de reprendre, à tout moment, le programme en cours de diffusion à un instant antérieur à l'instant courant ; par exemple la lecture du contenu peut être reprise depuis son commencement. Par exemple, si un film débute à 21h00 et si l'utilisateur zappe sur la chaine à 21h40, il peut demander à ce que la lecture du contenu reprenne depuis le début du film. Dans ce cas, on passe donc d'un mode de lecture à un contenu en temps réel (ou direct) à un mode de lecture en différé.

Quand cet utilisateur accède à un flux Live diffusé en direct en http Adaptative Streaming (HAS), le dispositif de lecture STB, sous-entendu l'entité HAS installé sur ce dispositif, récupère en général toutes les 2 secondes un fichier de description qui décrit généralement les soixantes dernières secondes du flux (30 segments de 2 secondes). On peut alors décider de bufferiser une certaine partie du flux (jusqu'à 60 secondes au maximum donc) ; les segments vidéos sont de courte durée car on souhaite être au plus proche du vrai Live. C'est également pour cette raison qu'on récupère le fichier de description toutes les 2 secondes et qu'on limite la profondeur de buffer en général autour de 15 secondes.

Une interface de commandes (<< >> II) permet d'agir sur la lecture courante du contenu. Des commandes permettent d'activer le mode rattrapage (ou start over).

De manière à assurer une exécution d'une commande de l'interface de commandes, Le fichier de description qui est récupéré ne décrit plus les soixante dernières secondes mais une fenêtre temporelle bien supérieure aux soixante secondes. La fenêtre temporelle peut concerner les quatre dernières heures ; dans ce cas, si on peut relire le contenu depuis un instant situé dans la fenêtre temporelle.

Ce fichier de description décrivant les quatre dernières heures est transmis périodiquement (généralement toutes les deux secondes) indépendamment du fait que le mode rattrapage est utilisé ou pas.

On désignera dans la suite les fichiers de description décrivant les dernières secondes (par exemple 60 secondes) « fichiers de description de premier type » et seront référencés MNFc et les fichiers de description décrivant quelques heures (par exemple les quatre dernières heures) « fichiers de description de deuxième type » et seront référencés MNFI. On comprend ici que la taille du fichier de description du deuxième type est plus importante que la taille du fichier de description du premier type.

Selon l'invention, la lecture initiale s'effectue par défaut au moyen de fichiers de description du premier type MNFc. Ensuite, au cours de la lecture, le type de fichier varie lorsqu'une commande est sélectionnée sur l'interface de commandes ; la lecture se poursuivant alors au moyen de fichiers de description du deuxième type MNFI reçus depuis le réseau.

La figure 5 illustre un mode de réalisation du procédé de l'invention. Sur cette figure 5, sont représentés deux axes verticaux correspondants respectivement à deux entités à savoir la première entité ENT1 présente sur le dispositif de lecture STB et la deuxième entité ENT2 présente sur le serveur SRV. La figure 5 illustre les échanges de données qui ont lieu entre le dispositif de lecture STB et le serveur de contenu. A droite des deux axes un cadre est représenté pour montrer quelles commandes sont disponibles via une interface de commandes INT tout au long de la lecture. On y trouve des commandes telles que
- une commande de retour « << »
- une commande Pause « II »
- une commande d'avance rapide « >> « (cette commande peut être utilisée alors que la lecture est déjà en différée).

A noter sue sur cette figure 5 seule une partie des messages utiles à la compréhension de l'invention sont illustrés. Par exemple, après réception d'un fichier de description par le dispositif de lecture STB, ce dernier requiert un accès aux segments décrits dans ce fichier de description ; nous avons choisi de ne pas faire apparaître ces messages d'accès car sans intérêt pour l'exposé de l'invention.

L'exécution des commande données à titre d'exemple ci-dessus entraîne une lecture différée du contenu en cours de diffusion. Ces commandes nécessitent donc une description de segments qui ne sont pas compris dans les fichiers de premier type qui concernent les derniers segments produits liés à la diffusion en temps réel. La première entité ENT1 va donc se charger de récupérer des fichiers de description de deuxième type pour pouvoir exécuter les commandes correctement.

Les étapes d'un mode de réalisation peuvent être les suivantes ; on suppose que l'interface de commandes comprend des commandes entraînant une lecture différée et requérant donc des fichiers de description du deuxième type.

Lors d'une première étape, la première entité ENT1 requiert un accès ACC à un contenu.

Lors d'une deuxième étape, le serveur SRV et donc la deuxième entité ENT2 reçoit la requête.

Lors d'une troisième étape, la deuxième entité ENT2 requiert la transmission, dans notre exemple à intervalle régulier (par exemple toutes les 2 secondes), des fichiers de description du premier type MNFc (« c »désigne les fichiers du premier type « court »). Les différents fichiers sont bien évidemment différents du fait qu'ils décrivent des segments différents.

A noter que la régularité des envois du fichier de description n'est pas essentielle. D'autres façons de transmettre le fichier peuvent être envisagées.

En référence à la figure 5, on suppose qu'à un instant T1, un utilisateur sélectionne la commande retour en arrière << sur sa télécommande.

Le décodeur STB reçoit la commande <<. La première entité ENT1 reçoit la commande.

A ce stade, le dispositif de lecture STB n'ayant pas le fichier de description du deuxième type ne dispose donc pas des adresses des segments demandés liés aux sauts temporels résultant de la commande de retour en arrière <<.

Dans notre exemple, suite à la sélection de la commande, la première entité ENT1 transmet une requête d'accès aux fichiers de description du deuxième type.

Le serveur SRV reçoit la requête et transmet des fichiers de description de deuxième type MLFI successivement à la place des fichiers du premier type MLFc.

La première entité ENT1 reçoit en retour les fichiers de description de deuxième type MNFI (I désigne le type de fichier « I » pour long).

Une fois le premier fichier de description de deuxième type MNFI1 reçu, le processeur du dispositif de lecture STB exécute la commande de retour en arrière « << » et peut accéder aux segments demandés en consultant les fichiers successivement MNFI1/MNFI2/etc. reçus.

Selon une variante, la première entité peut exécuter la commande non pas dès la réception du premier fichier mais dès la réception d'un autre fichier de description.

Le mode de réalisation décrit ci-dessus peut faire l'objet de variantes.

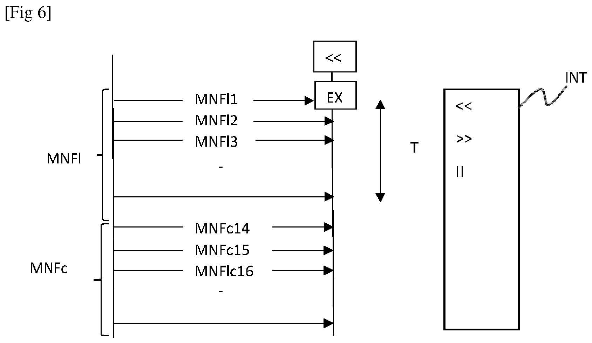

Selon une autre variante, en référence à la figure 6, l'instant d'exécution EX de la commande est choisi judicieusement. Dans notre exemple, la première entité ENT1, après réception de la sélection de la commande < <, temporise l'exécution de la commande pendant une durée de temporisation. Cette temporisation permet à la première entité ENT1 de transmettre une requête d'accès aux fichiers de description de deuxième type MNFI, de recevoir les fichiers de description de deuxième type en question et d'exécuter la commande de retour en arrière vers un segment situé dans l'intervalle de quatre heures précédant l'instant courant de lecture.

Selon une variante du mode décrit ci-dessus, en référence à la figure 6, la réception des fichiers de deuxièmes types cesse après une durée donnée T par exemple suivant sélection ou de l'exécution de la commande, et est remplacée par une réception de nouveau des fichiers de description du premier type.

La première entité ENT1 ou la deuxième entité ENT2, peuvent être indifféremment à l'origine de la commande de remplacement.

Comme décrit ci-dessus, la durée T définie ci-dessus peut avoir comme instant initial l'exécution EX de la commande comme cela est représenté sur la figure 6.

Selon une sous variante, une réception d'une nouvelle commande pendant la durée T réinitialise une durée T.

En définitive, l'invention concerne un procédé de gestion de l'accès à des fichiers de description associés à un contenu diffusé en temps réel (les fichiers de description comprenant des adresses d'accès à des segments aptes à être téléchargés et à être lus par le dispositif de lecture de segments STB), la lecture requérant une réception, depuis un réseau de communication, de fichiers de description d'un premier type MNFc ou d'un deuxième type MNFI, une interface de commandes INT étant accessible au cours de la lecture (comme on l'a vu l'exécution d'une commande (<< >>) de l'interface requiert une réception d'un fichier de description de deuxième type MNFI), caractérisé ce qu'il comprend une lecture initiale réalisée au moyen de fichiers de description du premier type MNFc, et en ce qu'au cours de la lecture, une requête d'accès au fichier de description du deuxième type MNFI est transmise si une commande est sélectionnée, la lecture se poursuivant au moyen de fichiers de description du deuxième type reçus depuis le réseau.

Précisons enfin ici aussi ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

### ANNEXE 1 : exemple de fichier manifest

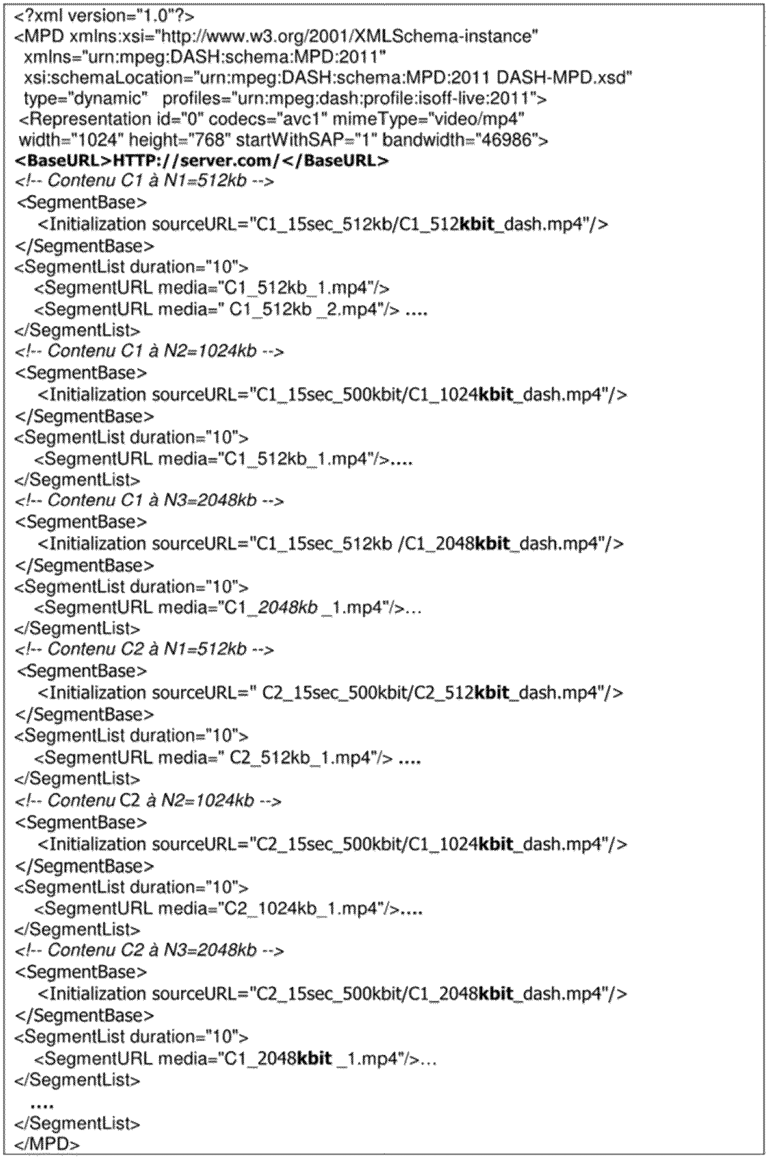

## Revendications

1. Procédé de gestion de l'accès à des fichiers de description associés à un contenu diffusé en temps réel, la lecture du contenu requérant une réception, depuis un réseau de communication, de fichiers de description d'un premier type (MNFc) ou d'un deuxième type (MNFI), une interface de commandes (INT) étant accessible au cours de la lecture, caractérisé ce qu'il comprend une lecture initiale réalisée au moyen de fichiers de description du premier type (MNFc), et en ce qu'au cours de la lecture, une requête d'accès au fichier de description du deuxième type (MNFI) est transmise si une commande est sélectionnée, la lecture se poursuivant au moyen de fichiers de description du deuxième type reçus depuis le réseau.

2. Procédé de gestion selon la revendication 1, **caractérisé en ce que** la réception des fichiers de deuxième type (MNFI) cesse après une durée donnée (T) et est remplacée par une réception du fichier de description du premier type (MNFc)

3. Procédé de gestion selon la revendication 1 ou 2, **caractérisé en ce que** la sélection est suivie d'une transmission d'une requête d'accès aux fichiers de description de deuxième type et **en ce que** la commande sélectionnée est exécutée après réception d'un fichier de description du deuxième type.

4. Procédé de gestion selon la revendication 3, caractérisé en la commande sélectionnée est exécutée après réception du premier fichier de description du deuxième type reçu.

5. Procédé de gestion selon la revendication 1 ou 2, **caractérisé en ce que** l'interface de commandes comprend des commandes dont certaines entraînent une lecture différée du contenu et **en ce que** la transmission d'une requête d'accès au fichier de description du deuxième type est effectuée uniquement pour des commandes entraînant une lecture différée.

6. Entité de gestion (ENT1) de l'accès à des fichiers de description associés à un contenu diffusé en temps réel, la lecture du contenu requérant une réception, depuis un réseau de communication, de fichiers de description d'un premier type (MNFc) ou d'un deuxième type (MNFI), une interface de commandes (INT) étant accessible au cours de la lecture, caractérisé ce qu'il comprend un module de lecture apte à lire initialement le contenu au moyen de fichiers de description du premier type (MNFc), et apte à, au cours de la lecture, suite à une sélection d'une commande, déclencher une transmission d'une requête d'accès au fichier de description du deuxième type ; la lecture se poursuivant au moyen de fichiers de description du deuxième type (MNFI) reçus en retour depuis le réseau.

7. Dispositif de lecture (STB) comprenant une entité de gestion (ENT1) telle que définie dans la revendication 8.

8. Programme d'ordinateur apte à être mis en oeuvre sur une entité de gestion (ENT) telle que définie dans la revendication 8, le programme comprenant des instructions de code qui, lorsqu'il est exécuté par un processeur, réalise les étapes du procédé définies dans la revendication 1.

9. Support de données sur lequel a été mémorisée au moins une série d'instructions de code de programme pour l'exécution d'un procédé selon la revendication 1.
